# EUROPÄISCHE PATENTANMELDUNG

(11) **EP 3 456 850 A1**
(43) Veröffentlichungstag der Anmeldung: **20.03.2019**
(21) Anmeldenummer: 17020581.9
(22) Anmeldetag: 19.12.2017
(51) Int. Cl.: C21C 5/46, C21C 5/52, C21B 5/00, F27D 19/00, F27D 21/00, F27D 21/02, F27D 21/04, F27B 7/34, F27B 7/42

(54) **VERFAHREN UND VORRICHTUNG ZUR STEUERUNG EINER VERBRENNUNG UND OFEN**

(30) Priorität: 19.09.2017 DE 102017008768
(71) Anmelder: Linde Aktiengesellschaft, 80331 München (DE)
(72) Erfinder: Schöninger, Martin, 4846 Redlham (AT)
(74) Vertreter: Gellner, Bernd

(57) **Zusammenfassung**

Die Erfindung betrifft ein Verfahren zur Steuerung einer Verbrennung in einem Ofen (100), der mittels eines Brenners (160) mit wenigstens einer Sauerstofflanze (120) beheizt wird, wobei ein Brennstoff mittels einer Brennstoffzufuhr (110) des Brenners (110) zugeführt wird und Sauerstoff zumindest zum Teil mit einer hohen Geschwindigkeit von 100 m/s oder mehr durch die wenigstens eine Sauerstofflanze (120) zugeführt wird, wobei Sauerstoff in einem überstöchiometrischen Bereich zugeführt wird. Weiterhin betrifft die Erfindung einen Ofen (100) zur Durchführung des Verfahrens.

## Beschreibung

Die Erfindung betrifft ein Verfahren zur Steuerung einer Verbrennung in einem Ofen sowie einen Ofen nach den Oberbegriffen der unabhängigen Ansprüche.

### Stand der Technik

In der Metallverarbeitungsindustrie müssen Schmelz- und Gießprozesse bezüglich der folgenden Aspekte optimiert werden. Vorheizen und Heizen von Schmelzen in einem Ofen auf benötigte Temperaturen müssen effizient durchgeführt werden, während ein Wärmeverlust durch Abgase so weit wie möglich reduziert werden muss. Mit konventionellen Heizprozessen kann es schwierig sein, die Temperaturflammenform und die Stöchiometrie zu steuern. Ferner sollten sowohl Rauch und Verschmutzung als auch Emissionen schädlicher Gase wie zum Beispiel NOx vermieden werden. Die existierende flammenlose und semiflammenlose Brennertechnologie bietet ein effektives Mittel zum Optimieren von Ofenvorheizungs- und -heizungsprozessen während einer Verbrennung eines Brennstoffes durch einen Oxyfuel-Brenner. Verbrennungsgase werden in die Verbrennungsreaktionszone gemischt, um die Reaktanden zu verdünnen. Dies verteilt die Verbrennung, verschiebt die Freisetzung von Wärme und senkt die Spitzen-Flammentemperatur, wodurch NOx-Emissionen reduziert werden. Das Mischen von Verbrennungsgasen in die Flamme verteilt auch die Energie in dem gesamten Ofen, wodurch eine schnellere und gleichmäßigere Erwärmung sichergestellt wird. Entsprechende Schmelzvorwärmsysteme der Anmelderin sind unter der Bezeichnung OXYGON (LTOF, REBOX-Brenner) bekannt.

Eine andere Niedrigtemperatur-Oxyfuel-Technologie der Anmelderin, die besonders für die Aluminiumindustrie konzipiert ist, ist unter LTOF (low-temperature oxy-fuel) bekannt. In einem Aluminiumschmelzofen tritt die Verbrennung unter einer verdünnten Sauerstoffkonzentration ein, indem Verbrennungsgase in die Verbrennungszone gemischt werden. Dies führt zu niedrigeren Flammentemperaturen unterhalb des Punktes, an dem thermisches NOx erzeugt wird. Ferner wird die Energie in dem gesamten Ofen für eine gleichmäßige Erwärmung und ein effizienteres Schmelzen verteilt. Typische Vorteile sind eine bis zu 50% höhere Schmelzrate, ein bis zu 50% niedrigerer Brennstoffverbrauch, das Vermeiden von Heißpunkten in dem Ofen, reduzierte Abgasvolumina und NOx-Emissionen.

Diese flammenlosen und semiflammenlosen Brennertechnologien basieren sämtlich auf Hochgeschwindigkeitssauerstoffstrahlen, um die flammenlose Wirkung zu erzeugen. Die Sauerstoffausgangsgeschwindigkeit ist typischerweise die Schallgeschwindigkeit in Sauerstoff, um ca. 305 m/s. Geschwindigkeiten ab ungefähr 100 m/s können auch verwendet werden. Die Hochgeschwindigkeitsstrahlen erzeugen eine sehr starke Rezirkulation innerhalb des Ofengasraumes, was in der oben erwähnten reduzierten NOx-Erzeugung durch reduzierte Spitzentemperaturen innerhalb der Flamme und in einer sehr homogenen Erwärmung des Ofens resultiert. Solche Brennertechnologien haben sich als sehr wirksam und brauchbar erwiesen. Jedoch sind diese Brennertechnologien bisher nicht für das Einschmelzen von Aluminiumschrott verwendet worden, da dort zusätzlich Schwelgase entstehen, die bei den bekannten Verfahren aus dem Stand der Technik nicht verbrannt werden.

Für das Einschmelzen von Aluminiumschrott ist das sogenannte WASTOX-Verfahren der Anmelderin bekannt. Eine Menge an zugeführtem Sauerstoff wird dabei in Abhängigkeit von Verbrennungsgasen im Ofen, insbesondere dem Kohlenmonoxid- oder dem Sauerstoffgehalt, zugeführt. Um die Menge an Kohlenmonoxid oder Sauerstoff zu bestimmen, sind zumeist Messsysteme in einem Abgasstrom, beispielsweise in einem Abgaskanal oder einem Abgasfuchs, vorhanden.

Die DE 101 14 179 A1 beschreibt beispielsweise einen Drehtrommelofen zum Einschmelzen von Aluminiumschrott. In einem Abgaskanal des Drehtrommelofens sind dabei ein Sauerstoffdetektor und ein Kohlenmonoxiddetektor vorhanden. Ein ähnliches System zeigt die EP 0 756 014 A1.

Aufgabe der Erfindung ist es, beim Einschmelzen von Aluminiumschrott gleichzeitig eine optimale Verbrennung von Schwelgasen und eine gleichmäßige Erwärmung und ein effizienteres Schmelzen bei niedriger NOx-Emission zu ermöglichen.

Erfindungsgemäß werden ein Verfahren zur Steuerung einer Verbrennung in einem Ofen sowie ein Ofen vorgeschlagen. Vorteilhafte Ausgestaltungen sind Gegenstand der Unteransprüche sowie der nachfolgenden Beschreibung.

### Vorteile der Erfindung

Erfindungsgemäß wird bei einem Verfahren zur Steuerung einer Verbrennung in einem Ofen, der mittels eines Brenners mit wenigstens einer Sauerstofflanze beheizt wird, ein Brennstoff mittels einer Brennstoffzufuhr des Brenners zugeführt und Sauerstoff zumindest zum Teil mit einer hohen Geschwindigkeit von 100 m/s oder mehr durch die wenigstens eine Sauerstofflanze zugeführt, wobei Sauerstoff in einem überstöchiometrischen Bereich bzw. Verhältnis zugeführt wird. Ein Verbrennungsluftverhältnis (Lambda) beträgt dabei bevorzugt zwischen 1,0 und 2,5, besonders bevorzugt zwischen 1,2 und 2,3.

Auf diese Weise werden die Vorteile eines LTOF-Brenners mit den Vorteilen des WASTOX-Verfahrens kombiniert. Dadurch, dass Sauerstoff mit einer hohen Geschwindigkeit von 100 m/s oder mehr zugeführt wird, werden Ofengase in einer Verbrennungszone umgewälzt, so dass eine Sauerstoffkonzentration in der Verbrennungszone verdünnt wird. Dadurch findet die Verbrennung bei einer niedrigeren Temperatur statt und eine NOx-Emission wird reduziert. Gleichzeitig verteilt sich die Verbrennung im Ofen, da sich auch der Sauerstoff im Ofen verteilt, so dass eine gleichmäßige Erwärmung und ein effizientes Schmelzen ermöglicht werden. Dadurch, dass Sauerstoff im überstöchiometrischen Bereich zugeführt wird, ist genügend Sauerstoff vorhanden, um Schwelgase im Ofen zu verbrennen und eine vollständige Verbrennung von Verunreinigungen zu ermöglichen.

Da der LTOF-Brenner bereits wenigstens eine Sauerstofflanze umfasst, kann auf weitere Sauerstofflanzen, die beim WASTOX-Verfahren noch benötigt werden, verzichtet werden. Vorteilhaft umfasst der Brenner mehrere Sauerstofflanzen, bevorzugt zwei bis fünf, besonders bevorzugt vier. Auf diese Weise kann der Sauerstoff besonders gut zu einer gleichmäßigen Umwälzung der Ofengase beitragen.

In einer vorteilhaften Ausführungsform wird der Sauerstoff zumindest zum Teil mit einer Geschwindigkeit im Bereich der Schallgeschwindigkeit im Sauerstoff zwischen 290 m/s und 320 m/s zugeführt wird. Solche Geschwindigkeiten haben sich besonders zweckmäßig für die gewünschte Zirkulation der Ofengase erwiesen.

Zweckmäßigerweise umfasst der Brenner vier Sauerstofflanzen, durch die der Sauerstoff zugeführt wird. Dies ist nicht beschränkend zu verstehen. So ist auch eine andere Zahl von Sauerstofflanzen denkbar, bevorzugt zwei bis fünf. Auf diese Weise kann der Sauerstoff besonders gut zu einer gleichmäßigen Umwälzung der Ofengase beitragen.

In einer weiteren vorteilhaften Ausführungsform erfolgt die Ansteuerung der Sauerstoffzufuhr automatisch geregelt über eine Abgasmessung. Dies ist besonders zweckmäßig, da über Abgaswerte sehr genau auf eine Stöchiometrie der Verbrennung rückgeschlossen werden kann.

Bevorzugt wird bei der Abgasmessung ein O₂-Anteil gemessen. Dieser Wert kann vorteilhaft als Führungsgröße für die Steuerung bei der Pyrolyse von Verunreinigungen und/oder beim Einschmelzen von Aluminium verwendet werden. Die Verwendung des Sauerstoffwertes im Abgas ergibt ein sicheres Regelkriterium, nach dem der Ofen gefahren werden kann. Werden bei Beginn einer Aluminiumschmelze hohe Mengen an Kohlenwasserstoffen pyrolisiert, ohne vollständig zu verbrennen, so sinkt der Sauerstoffgehalt in der Ofenatmosphäre. Die Regelung nach der Sauerstoffmenge im Abgas lässt eine sehr feine und empfindliche Dosierung der Steuerung des Verfahrens zu, um eine Sauerstoffzufuhr in einem überstöchiometrischen Bereich zu gewährleisten.

In einer weiteren vorteilhaften Ausführungsform wird bei der Abgasmessung ein CO-Anteil gemessen. Ein zu hoher CO-Wert ist ein Zeichen für eine nicht ausreichende Sauerstoffzufuhr. Dieser Wert wird jedoch bevorzugt als Sicherheitsgröße verwendet. Die Regelung des Verfahrens erfolgt dann über den O₂-Wert, während die CO-Messung als Sicherheitsgröße übergeschaltet ist. Mit dieser doppelten Absicherung ist das Abschwelen in die Verbrennung der entstehenden Schwelgase im Ofengefäß ausreichend zuverlässig gewährleistet.

Alternativ oder zusätzlich erfolgt die Ansteuerung der Sauerstoffzufuhr bevorzugt automatisch geregelt über eine Messung eines Flammensignals. Abgasmessungen bestimmen die Menge an Sauerstoff oder Kohlenmonoxid außerhalb des Ofens bzw. außerhalb eines Verbrennungsraums des Ofens. Die Abgasmessung erfolgt somit zeitverzögert. Bei der Messung des Flammensignals wird die Flamme des entzündeten Verbrennungsgases bzw. das Spektrum dieser Flamme genutzt, um das in dem Ofen vorhandene Verbrennungsgas zu detektieren.
Dies kann beispielsweise mit einer kostengünstigen UV-Sonde und/oder einem Spektrometer bzw. einer UV-Licht-Sonde realisiert werden, welche problemlos derart außerhalb des Ofens angebracht werden können, dass sie z.B. auf einen Ringspalt des Ofens blicken, wo der Duck des Verbrennungsraumes anliegt. Flammt der Ofen aus, d.h. unverbrannte Anteile der Ofenatmosphäre reagieren mit der Umgebungsluft, so kann die UV-Sonde ein Flammensignal detektieren. Vorteilhafterweise wird aus dem detektierten UV-Anteil des Spektrums der Flamme eine Menge des Verbrennungsgases bestimmt. Je höher ein Anteil des zu detektierenden Verbrennungsgases an der Ofenatmosphäre ist, desto höher ist die Flammenausbildung und desto ausgeprägter ist der UV-Anteil des Flammenspektrums. Vorteilhafterweise wird eine Menge des durch die Sauerstoffzufuhr zugeführten Sauerstoffs in Abhängigkeit von dem detektierten Verbrennungsgas eingestellt bzw. gesteuert bzw. geregelt. Insbesondere wird somit ein überstöchiometrisches Verbrennungsverhältnis eingestellt, bei dem eine vollständige Verbrennung stattfindet.

Diese genannten automatisch geregelten Ansteuerungen sind nicht beschränkend zu verstehen. So ist auch denkbar, dass eine Ansteuerung der Sauerstoffzufuhr manuell erfolgt. So kann ein stöchiometrisches Verhältnis nach Betriebserfahrung auch beispielsweise auf Sicht eingestellt werden.

In einer weiteren vorteilhaften Ausführungsform wird ein Drehtrommelofen als Ofen genutzt. Dies ist vorteilhaft, da die Verbrennung hier zusätzlich über eine Einstellung der Drehbewegung des Ofens reguliert werden kann.

Bevorzugt wird in dem Ofen kontaminierter Aluminiumschrott eingeschmolzen. Durch eine semiflammenlose Flamme des Brenners mit hoher Konvektion wird der Aluminiumschrott erhitzt, was zu einer Pyrolyse organischer Komponenten des Aluminiumschrotts führt. Bei dieser Pyrolyse entsteht zum Beispiel Kohlenmonoxid als Verbrennungsgas.

Ein Anhalten der Drehbewegung des Drehtrommelofens verursacht eine kleinere Aluminiumoberfläche und dadurch eine geringere Pyrolyse der Komponenten. Dadurch kann der Sauerstoffgehalt einer Atmosphäre des Ofens wieder ansteigen und kann so immer im überstöchiometrischen Bereich gehalten werden. Erkennt die Regelung dann, dass weniger pyrolisiert wird, kann der Ofen in Schritten wieder angefahren werden, wodurch die Aluminiumoberfläche größer wird und wieder neue Pyrolyse stattfinden kann, bei der neue Kohlenwasserstoffe zu CO verbrannt werden. Dieses kann durch Zugeben von ausreichend O₂ vollständig zu CO₂ verbrannt werden oder, wenn das nicht reicht, wieder zu einem Stillsetzen des Ofens führen, wodurch die Pyrolyse wieder verringert wird. Auf diese Weise kann der Ofen sicher automatisch gefahren werden, auch wenn sehr große Mengen an organischen Verunreinigungen am Aluminium haftend zugegeben wurden. Reinigungs- und Zerkleinerungsschritte vor dem Einschmelzen können so entfallen, wodurch der Gesamtbetrieb der Anlage billiger wird.

Gemäß einem weiteren Aspekt der Erfindung wird ein Ofen vorgeschlagen. Der Ofen dient zur Durchführung eines Verfahrens wie oben beschrieben und umfasst einen Brenner mit wenigstens einer Sauerstofflanze, wobei der Brenner konfiguriert ist, um über eine Brennstoffzufuhr dem Ofen einen Brennstoff zuzuführen, wobei die wenigstens eine Sauerstofflanze konfiguriert ist, um Sauerstoff mit einer hohen Geschwindigkeit von 100 m/s oder mehr durch die wenigstens eine Sauerstofflanze dem Ofen zuzuführen, wobei der Ofen eine Sensoreinheit zur Detektion einer Stöchiometrie und eine Steuereinheit, die in Abhängigkeit von einem Signal der Sensoreinheit die Sauerstoffzufuhr derart einstellt, dass eine Sauerstoffkonzentration in einem überstöchiometrischen Bereich vorliegt, aufweist.

Es versteht sich, dass die vorstehend genannten und die nachstehend noch zu erläuternden Merkmale nicht nur in der jeweils angegebenen Kombination, sondern auch in anderen Kombinationen und in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

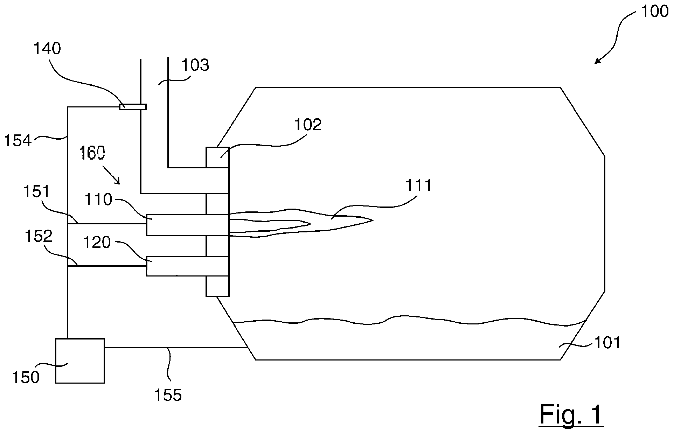

- Figur 1: zeigt schematisch eine bevorzugte Ausgestaltung eines erfindungsgemäßen Ofens, der als ein Drehtrommelofen ausgebildet ist und dazu eingerichtet ist, eine bevorzugte Ausführungsform eines erfindungsgemäßen Verfahrens durchzuführen.

In der einzigen Figur 1 ist ein als Drehtrommelofen ausgebildeter Ofen schematisch dargestellt und mit 100 bezeichnet. Der Drehtrommelofen 100 ist in diesem speziellen Beispiel dazu eingerichtet, kontaminierten Aluminiumschrott 101 einzuschmelzen. Mittels einer Tür 102 kann der Aluminiumschrott 101 in den Drehtrommelofen 100 eingebracht werden. Des Weiteren wird der Drehtrommelofen 100 mittels der Tür 102 verschlossen. Der Drehtrommelofen 100 weist weiterhin einen Brenner 160 mit einer Brennstoffzufuhr 110 auf, der beispielsweise in der Tür 102 angeordnet sein kann.

Der Brenner 110 ist als LTOF-Brenner ausgebildet und weist weiterhin eine als mindestens eine Sauerstofflanze 120 ausgebildete Sauerstoffzufuhr auf. Mittels der Sauerstofflanze 120 wird dem Drehtrommelofen 100 eine Menge an Sauerstoff zugeführt. Dieser wird mit einer hohen Geschwindigkeit von 100 m/s oder mehr zugeführt. Insbesondere wird die Sauerstoffmenge derart bemessen, dass Sauerstoff in einem überstöchiometrischen Bereich zugeführt wird.

Die Brennerflammen 111 und 121 des Brenners 110 erhitzen den Aluminiumschrott 101, was zu einer Pyrolyse des Aluminiumschrotts 101, insbesondere von organischen Komponenten des Aluminiumschrotts 101, führt. Dabei entsteht Kohlenmonoxid als Verbrennungsgas. Über einen Abgaskanal 103 wird Abgas in einem Abgasstrom aus dem Drehtrommelofen 100 abgeführt.

Durch die hohe Geschwindigkeit bzw. den hohen Impuls, mit welcher die Sauerstoffmenge durch die Sauerstofflanze 120 dem Drehtrommelofen zugeführt wird, zirkuliert das Kohlenmonoxid und die anderen Verbrennungsgase in dem Drehtrommelofen 100 und wird von dem ausströmenden Gas der Sauerstofflanze 120 angesaugt. Da der Sauerstoff mit hoher Geschwindigkeit (über 100 m/s) injiziert wird, kann keine Flamme im klassischen Sinne entstehen, sondern eine semiflammlose Flamme (nicht gezeigt) breitet sich mit hoher Konvektion aus. Der Drehtrommelofen bzw. eine Steuereinheit 150 sind dazu eingerichtet, eine bevorzugte Ausführungsform eines erfindungsgemäßen Verfahrens durchzuführen.

In dieser Ausführungsform ist eine Sensoreinrichtung 140 in dem Abgaskanal 103 angeordnet und detektiert dort eine Sauerstoffmenge oder eine Kohlenmonoxidmenge Diese Sensoreinrichtung 140, die eventuell auch eine UV-Sonde sein kann, ist über eine Verbindung 154 mit der Steuereinheit 150 verbunden.

Die bestimmte Menge an Kohlenmonoxid und anderen Reaktionsgasen wird genutzt, um die Menge an durch die Sauerstofflanze 120 zugeführtem Sauerstoff insbesondere im Zuge einer Regelung einzustellen. Die Steuereinheit 150 berechnet in Abhängigkeit von der bestimmten Menge an Kohlenmonoxid und anderen Reaktionsgasen die Menge an Sauerstoff, um Sauerstoff in einem überstöchiometrischen Verhältnis zuzuführen. Demgemäß steuert die Steuereinheit 150 die Sauerstofflanze 120 an, angedeutet durch Bezugszeichen 152, damit die bestimmte Menge an Sauerstoff dem Drehtrommelofen 100 zugeführt wird.

Des Weiteren steuert die Steuereinheit 150 zweckmäßig eine Drehbewegung des Drehtrommelofens 100, angedeutet durch Bezugszeichen 155.

## Patentansprüche

1. Verfahren zur Steuerung einer Verbrennung in einem Ofen (100), der mittels eines Brenners (160) mit wenigstens einer Sauerstofflanze (120) beheizt wird, wobei ein Brennstoff mittels einer Brennstoffzufuhr (110) des Brenners (160) zugeführt wird und Sauerstoff zumindest zum Teil mit einer hohen Geschwindigkeit von 100 m/s oder mehr durch die wenigstens eine Sauerstofflanze (120) zugeführt wird, **dadurch gekennzeichnet, dass** Sauerstoff in einem überstöchiometrischen Bereich zugeführt wird.

2. Verfahren nach Anspruch 1, wobei der Sauerstoff zumindest zum Teil mit einer Geschwindigkeit im Bereich der Schallgeschwindigkeit im Sauerstoff zwischen 290 m/s und 320 m/s zugeführt wird.

3. Verfahren nach Anspruch 1 oder 2, wobei der Brenner vier Sauerstofflanzen (120) umfasst, durch die der Sauerstoff zugeführt wird.

4. Verfahren nach einem der Ansprüche 1 bis 3, wobei die Ansteuerung der Sauerstoffzufuhr automatisch geregelt über eine Abgasmessung erfolgt.

5. Verfahren nach Anspruch 4, wobei bei der Abgasmessung ein O₂-Anteil gemessen wird.

6. Verfahren nach Anspruch 4 oder 5, wobei bei der Abgasmessung ein CO-Anteil und/oder ein Anteil anderer Reaktionsgase gemessen wird.

7. Verfahren nach einem der Ansprüche 1 bis 6, wobei die Ansteuerung der Sauerstoffzufuhr automatisch geregelt über eine Messung eines Flammensignals erfolgt.

8. Verfahren nach Anspruch 7, wobei das Flammensignal mit einem UV-Licht-Sensor gemessen wird.

9. Verfahren nach einem der Ansprüche 1 bis 3, wobei die Ansteuerung der Sauerstoffzufuhr manuell erfolgt.

10. Verfahren nach einem der vorstehenden Ansprüche, wobei ein Drehtrommelofen (100) als Ofen (100) genutzt wird.

11. Verfahren nach einem der vorstehenden Ansprüche, wobei in dem Ofen (100) kontaminierter Aluminiumschrott (101) eingeschmolzen wird.

12. Ofen (100) zur Durchführung eines Verfahrens nach einem der Ansprüche 1 bis 11, umfassend:
einen Brenner (160) mit
wenigstens einer Sauerstofflanze (120),
wobei der Brenner (160) konfiguriert ist, um über eine Brennstoffzufuhr (110) einen Brennstoff zuzuführen, wobei die wenigstens eine Sauerstofflanze (120) konfiguriert ist, um Sauerstoff mit einer hohen Geschwindigkeit von 100 m/s oder mehr durch die wenigstens eine Sauerstofflanze (120) zuzuführen, **dadurch gekennzeichnet, dass**
der Ofen (100) eine Sensoreinheit (130) zur Detektion einer Stöchiometrie und eine Steuereinheit (150), die in Abhängigkeit von einem Signal der Sensoreinheit (130) die Sauerstoffzufuhr derart einstellt, dass eine Sauerstoffkonzentration in einem überstöchiometrischen Bereich vorliegt.
